# DEMANDE DE BREVET EUROPEEN

(11) **EP 3 427 924 A1**
(43) Date de publication de la demande: **16.01.2019**
(21) Numéro de dépôt: 18179438.9
(22) Date de dépôt: 25.06.2018
(51) Int. Cl.: B29C 64/245, B29C 64/223, B33Y 30/00

(54) **PROCÉDÉ ET MACHINE DE FABRICATION DE PIÈCES CRUES EN MATERIAU CÉRAMIQUE ET/OU MÉTALLIQUE PAR LA TECHNIQUE DES PROCÉDÉS ADDITIFS**

(30) Priorité: 13.07.2017 FR 1756694
(71) Demandeur: S.A.S 3DCeram-Sinto, 87280 Limoges (FR)
(72) Inventeur: CHAPUT, Christophe, 87410 Le Palais sur Vienne (FR); GAIGNON, Richard, 91770 Saint-Vrain (FR)
(74) Mandataire: Cabinet Chaillot

(57) **Abrégé**

Selon l'invention, avant de réaliser la première couche :
- on couvre la plate-forme de construction (3) d'une feuille de support (9) apte à être sollicitée contre celle-ci en formant une surface rigide et fixe de réception des couches successives apte à retenir sur celle-ci les couches successives formées ; et
- on sollicite ladite feuille de support (9) contre ladite plate-forme de construction (3)
- on forme la pièce crue (10) par la technique des procédés additifs ; et
- une fois la pièce crue (10) ainsi formée, on supprime la sollicitation afin de détacher de ladite plate-forme (3) ladite feuille de support (9) sur laquelle se trouve la pièce crue (10) avec la partie de la composition photodurcissable qui n'a pas été durcie ;
- on retire ladite partie de composition photodurcissable non durcie ; et
- on décroche ladite pièce crue de ladite feuille de support (9).

## Description

La présente invention concerne un procédé et une machine de fabrication de pièces crues par des procédés additifs, de telles pièces crues étant destinées à être soumises à des opérations de nettoyage, déliantage et frittage pour obtenir des pièces céramiques et/ou métalliques finies.

La technique des procédés additifs, également appelée stéréolithographie, comprend généralement les étapes suivantes, pour l'obtention de ces pièces crues :
- on construit, par conception assistée par ordinateur, un modèle informatique de la pièce à fabriquer, modèle dont les dimensions sont légèrement plus grandes que celles de la pièce à fabriquer afin de prévoir un retrait du matériau céramique ou métallique au cours de la fabrication de la pièce ; et
- on fabrique la pièce par la technique des procédés additifs, technique selon laquelle :
   - on forme, sur un support rigide, une première couche d'une composition photodurcissable comprenant au moins une matière céramique ou métallique, au moins un monomère et/ou oligomère photodurcissable, au moins un photoinitiateur et le cas échéant au moins un plastifiant et/ou au moins un solvant et/ou au moins un dispersant ;
   - on fait durcir la première couche de la composition photodurcissable par irradiation (par balayage laser de la surface libre de ladite couche ou par système de projection à diodes) selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant comme pour la première couche ;
   - optionnellement, on répète les étapes ci-dessus pour obtenir la pièce à l'état cru.

Ensuite, comme indiqué ci-dessus, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

On peut fabriquer la pièce par voie pâteuse ou par voie liquide.
- Dans une fabrication par voie pâteuse, la composition photodurcissable se présente sous la forme d'une pâte dont la viscosité peut varier notamment de 1 Pa.s à l'infini pour un taux de cisaillement nul, et le support rigide est une plate-forme de travail supportant les différentes couches de la pièce en cours de construction ainsi que la pâte et l'on forme généralement chacune des couches par abaissement de la plate-forme de travail et étalement d'une épaisseur de pâte prédéfinie. Une réserve de pâte est stockée dans des réservoirs qui sont automatiquement vidés d'une quantité de pâte prédéfinie à chaque couche à l'aide d'un piston. Cela crée un bourrelet de pâte à étaler sur la couche supérieure de la pièce en cours de fabrication qui aura été abaissée auparavant par la plate-forme de travail. Chaque couche est généralement étalée par raclage par une lame de raclage qui balaye la surface de travail de la plate-forme de travail, par exemple en avançant suivant une direction horizontale rectiligne.
- Dans une fabrication par voie liquide, la composition photodurcissable se présente sous la forme d'une suspension de faible viscosité.
   - Dans un premier mode de réalisation par la voie liquide, le support rigide est une plate-forme que l'on fait descendre dans un bain de la suspension photodurcissable pour la recouvrir d'une couche de ladite suspension, couche que l'on fait ensuite durcir par irradiation comme indiqué ci-dessus. Sur cette première couche, on forme ensuite successivement chacune des autres couches par abaissement pas à pas de la plate-forme dans le bain de telle sorte que l'étage supérieur de la pièce en cours de formation soit abaissé sous la surface libre de la suspension photodurcissable pour la formation de la couche en question, laquelle est ensuite irradiée.
   - Dans un deuxième mode de réalisation par la voie liquide, la suspension photodurcissable est contenue dans un réservoir à fond transparent pour l'irradiation, et la pièce est maintenue sur un support rigide qui est une plate-forme remontée pas à pas. Ainsi, on commence par faire durcir une couche de fond, puis la plate-forme est remontée d'un pas pour permettre à la suspension de constituer une nouvelle couche que l'on fait alors durcir, l'opération étant répétée à chaque couche.
   - Dans un troisième mode de réalisation par la voie liquide, la suspension photodurcissable est étalée en couche sur un film transparent pour l'irradiation, le film étant apte à se dérouler horizontalement. La pièce est formée sur une plate-forme rigide qui descend pour venir en contact avec la couche que l'on fait durcir par irradiation à travers le film. On déroule ensuite un nouveau segment de film revêtu d'une nouvelle couche photodurcissable et on réitère l'opération jusqu'à la fin de la construction de la pièce.

Il est important qu'il y ait une bonne liaison entre la surface de construction, autrement dit la plate-forme rigide de travail (face supérieure de la plate-forme de travail dans le cas respectivement de la voie pâteuse et du premier mode de réalisation précité en voie liquide, et face inférieure de la plate-forme dans le cas des deuxième et troisième modes de réalisation précités en voie liquide), et la pièce qui est construite par l'empilage des couches.

Pour favoriser la construction de la pièce, il faut que le bridage de la pièce en construction sur la plate-forme rigide soit le plus rigide possible. En cas de mauvais bridage, la pièce risque de se déplacer durant sa construction. Un tel risque est important en particulier lorsque l'on utilise un système de raclage pour empiler les couches (voie pâteuse), et ce, d'autant que les pâtes utilisées ont une viscosité importante et que les couches étalées sont de faible épaisseur. Ces paramètres réunis conduisent à exercer des contraintes importantes lors du passage du racleur. Ainsi, une pièce qui se déplace lors de sa construction sera mal construite ou ne respectera pas les tolérances géométriques souhaitées.

Par ailleurs, une fois la pièce construite, il faut être capable de la retirer de la plate-forme rigide sans la détériorer. Lors de cette étape de retrait, il faut appliquer une contrainte sur la pièce pour la décoller. L'opérateur sera alors amené à utiliser un outil tel qu'une spatule qui risque d'endommager la pièce car il sera amené à déformer la pièce afin de la tordre pour la décrocher.

Pour résoudre ce problème de bridage dans le but d'améliorer la qualité des pièces et la fiabilité de leur fabrication par procédés additifs, la Société déposante a recherché une solution apportant une force de bridage importante, maintenue tout au long de l'empilement des couches, et permettant un retrait de la pièce sans abîmer celle-ci, et ce sans faire appel à des opérations compliquées de montage ou préparation du support rigide. Rappelons que la force de bridage doit être telle que tout mouvement de la pièce pendant sa fabrication doit être empêché, un tel mouvement se traduisant par une impossibilité de tenir les tolérances, un état de surface de la pièce crue de mauvaise qualité dû à une mauvaise superposition des couches et une rupture des pièces après un contact direct avec le racleur.

Selon l'invention, on prévoit de placer, sur la plate-forme rigide, une feuille de support, laquelle sera bridée, c'est-à-dire rigoureusement fixée, par sollicitation sur la plate-forme rigide, ladite feuille de support étant choisie en un matériau apte, une fois la pièce crue terminée, à être déformé par contrainte, en vue de permettre le décollage de celle-ci, la sollicitation ayant été supprimée.

La présente invention a donc d'abord pour objet un procédé de fabrication, par la technique des procédés additifs, d'une pièce crue en au moins un matériau choisi parmi les matériaux céramiques et les matériaux métalliques, procédé suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir sur la couche précédente, caractérisé par le fait que :
- avant de réaliser la première couche :
   - on couvre la plate-forme de construction d'une feuille de support apte à être sollicitée contre celle-ci en formant une surface rigide et fixe de réception des couches successives apte à retenir sur celle-ci les couches successives formées ; et
   - on sollicite ladite feuille de support contre ladite plate-forme de construction ;
- on forme la pièce crue par la technique des procédés additifs ; et
- une fois la pièce crue ainsi formée, on supprime la sollicitation afin de détacher de ladite plate-forme ladite feuille de support sur laquelle se trouve la pièce crue avec la partie de la composition photodurcissable qui n'a pas été durcie ;
- on retire ladite partie de composition photodurcissable non durcie ; et
- on décroche ladite pièce crue de ladite feuille de support.

Les matériaux céramiques sont les matériaux céramiques frittables pulvérulents choisis notamment parmi l'alumine (Al₂O₃), la zircone (Zr₂), la zircone renforcée par alumine, le zircon (ZrSiO₄), la silice (SiO₂), l'hydroxyapatite, la zircon silice (ZrSiO₄ + SiO₂), le nitrure de silicium, le phosphate tricalcique (TCP), le nitrure d'aluminium, le carbure de silicium, la cordiérite et la mullite.

Les matériaux métalliques sont les matériaux métalliques frittables pulvérulents choisis parmi les métaux purs, tels que Al, Cu, Mg, Si, Ti, Zn, Sn, Ni ..., leurs alliages et les mélanges de métaux purs et de leurs alliages.

De façon particulièrement préférée, on peut choisir une feuille de support déformable pour permettre, une fois la sollicitation supprimée, de décrocher la pièce crue de sa feuille de support par application d'une contrainte sur ladite feuille de support de manière à la déformer dans le but de libérer la pièce crue.

Conformément à des modes de réalisation particuliers du procédé selon la présente invention, on peut utiliser une composition photodurcissable de consistance pâteuse, laquelle est étalée couche après couche sur la plate-forme de construction, les couches étant irradiées par le dessus,
ou on peut utiliser une composition photodurcissable en suspension,
la plate-forme étant descendue pas à pas dans la suspension pour former les couches successives irradiées par le dessus, ou
la plate-forme étant disposée à une distance correspondant à l'épaisseur d'une couche du fond d'un réservoir de composition photodurcissable à fond transparent pour l'irradiation et remontée à chaque formation de couche, les couches étant à chaque fois irradiées par le dessous ; ou la plate-forme venant à chaque formation de couche en contact avec une couche de suspension appliquée sur un segment d'un film transparent que l'on fait se dérouler horizontalement pour présenter un nouveau segment à chaque formation de couche, les couches étant à chaque fois irradiées par le dessous.

Conformément à un premier mode de réalisation particulier du procédé selon la présente invention, on réalise la sollicitation par aspiration de ladite feuille de support contre ladite plate-forme de construction.

Conformément à une première variante de ce premier mode de réalisation, on utilise, comme plate-forme de construction, une plaque plane perforée ou poreuse en un matériau rigide, tel que céramique, métallique ou plastique, dont on recouvre la face libre par la feuille de support et qui est reliée, par sa face opposée, à une pompe à vide ou à un générateur de vide, laquelle ou lequel est mis(e) en service pour plaquer la feuille de support sur la face libre de la plate-forme en formant la surface rigide et fixe de réception des couches successives de composition photodurcissable, et mis(e) hors service pour détacher ladite feuille de support de ladite plate-forme.

En particulier, on peut utiliser une plaque perforée dont les perforations se présentent notamment sous la forme de trous et/ou de fentes reliés à la pompe à vide ou au générateur de vide, disposés pour assurer lorsque celle-ci ou celui-ci est en marche le plaquage de la feuille de support.

Les trous et/ou fentes sont de toute forme et peuvent avantageusement être dimensionnés et/ou disposés pour assurer un bon plaquage de la feuille de support, en assurant une augmentation de la dépression en certains endroits si souhaité. On peut mentionner à titre d'exemples des trous de 0,01-5 mm de diamètre, distants de 0,1-50 mm, ou des fentes d'une largeur de 0,01-5 mm, distantes de 0,1-50 mm. Les trous ne sont pas nécessairement circulaires et ne sont pas nécessairement disposés sous la forme d'un quadrillage et les fentes ne sont pas nécessairement de largeur constante sur toute leur hauteur.

Conformément à une deuxième variante de ce premier mode de réalisation, on utilise, comme plate-forme de construction, un réceptacle, notamment en métal ou matière plastique, de forme plate, dont le fond présente des perforations reliées à une pompe à vide et qui reçoit une grille, notamment en métal, la feuille de support venant s'appliquer sur la bordure libre du réceptacle et sur la grille, ladite pompe à vide étant mise en service pour plaquer ladite feuille de support sur la bordure libre du réceptacle et sur la grille en formant la surface rigide et fixe de réception des couches successives de composition photodurcissable, et mise hors service pour détacher ladite feuille de support de ladite plate-forme.

Dans ce premier mode de réalisation de la présente invention :
- on peut utiliser une feuille de support (9) ayant une épaisseur de 0,05 - 5 mm ; en tout cas, on choisit une épaisseur de feuille qui n'empêche pas la déformation de celle-ci ;
- on peut utiliser une feuille de support (9) en poly(chlorure de vinyle) ou en alcool polyvinylique ;
- on peut générer un vide de 13,33 Pa - 10⁻¹⁰ Pa (0,133 mbar-10⁻¹² mbar) .

Conformément à un deuxième mode de réalisation particulier du procédé de la présente invention, on réalise la sollicitation par attraction magnétique de ladite feuille de support, laquelle est en une matière ferro-magnétique, sur la plate-forme de construction, laquelle est apte à générer un flux magnétique commandable, ledit flux magnétique étant activé pour plaquer ladite feuille de support sur ladite plate-forme, et désactivé pour détacher ladite feuille de support de ladite plate-forme.

Conformément à une première variante de ce deuxième mode de réalisation, on utilise, comme plate-forme, un plateau magnétique à aimants permanents activable ou désactivable mécaniquement.

Conformément à une deuxième variante de ce deuxième mode de réalisation, on utilise, comme plate-forme, un plateau électromagnétique à bobine(s), le flux magnétique étant activé lorsqu'un courant continu est envoyé dans la ou les bobines, et désactivé lorsqu'aucun courant ne traverse la ou les bobines.

La présente invention a également pour objet une machine de fabrication par la technique des procédés additifs de pièces crues en un matériau choisi parmi les matériaux céramiques et les matériaux métalliques, suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir sur la couche précédente, ladite machine comportant également des moyens d'irradiation des couches successives,
caractérisée par le fait que la machine comporte des moyens de sollicitation contre ladite plate-forme de construction d'une feuille de support destinée à la couvrir avant la réalisation de la première couche, en formant une surface rigide et fixe de réception des couches successives, apte à retenir sur celle-ci les couches successives formées, lesdits moyens de sollicitation étant aptes à être désactivés pour détacher de ladite plate-forme ladite feuille de support sur laquelle se trouve la pièce crue avec la partie de la composition photodurcissable qui n'a pas été durcie.

De façon particulièrement préférée, la feuille de support peut être choisie déformable pour permettre, une fois la sollicitation supprimée, de décrocher la pièce crue de sa feuille de support par application d'une contrainte sur ladite feuille de support de manière à la déformer dans le but de libérer la pièce crue. On peut citer une feuille d'une épaisseur de 0,05 à 1 mm. En tout cas, on choisit une épaisseur de feuille qui n'empêche pas la déformation de celle-ci.

La machine selon la présente invention peut présenter les caractéristiques particulières suivantes :
- elle est destinée à la formation de pièces crues à partir d'une composition photodurcissable sous la forme d'une pâte et elle comporte des moyens de raclage de la pâte pour étaler les couches successives sur la plate-forme de construction, au-dessus de laquelle la feuille de support est placée, les moyens d'irradiation étant placés au-dessus de celle-ci ; ou
- elle est destinée à la formation de pièces crues à partir d'une composition photodurcissable sous la forme d'une suspension et
   - elle comporte un bac à remplir par ladite suspension, dans lequel la plate-forme de construction sur laquelle la feuille de support est placée est apte à descendre pas à pas pour former sur celle-ci à chaque pas une couche à irradier, les moyens d'irradiation étant placés au-dessus de ladite plate-forme ; ou
   - elle comporte un réservoir à fond transparent pour l'irradiation, dans lequel la plate-forme sous laquelle la feuille de support est placée est apte à remonter pas à pas pour former à chaque pas entre le fond et ladite feuille de support une couche à irradier, les moyens d'irradiation étant placés au-dessous dudit fond du réservoir ; ou
   - elle comporte un dispositif permettant de faire se dérouler horizontalement une feuille transparente pour l'irradiation en formant des segments de feuille successifs recevant à chaque fois une couche de composition photodurcissable, la plate-forme de construction sous laquelle la feuille de support est placée étant apte à descendre sur la couche à irradier se trouvant à chaque fois sur un segment de feuille transparente, les moyens d'irradiation étant placés au-dessous de ladite feuille transparente.

Conformément à un premier mode de réalisation particulier de la machine selon la présente invention, les moyens de sollicitation sont des moyens de bridage par aspiration, consistant notamment en une pompe à vide, telle qu'une pompe à palette, une pompe à membrane, une pompe à piston(s), ou en un générateur de vide tel qu'un générateur à effet Venturi, lesdits moyens d'aspiration étant notamment aptes à générer un vide de 13,33 Pa - 10⁻¹⁰ Pa (0,133 mbar-10⁻¹² mbar) .

Conformément à une première variante de ce premier mode de réalisation de la machine selon l'invention, la plate-forme de construction est une plaque plane perforée ou poreuse en un matériau rigide, tel que céramique, métallique ou plastique, dont on recouvre la face libre par la feuille de support et qui est reliée, par sa face opposée, à une pompe à vide ou à un générateur de vide, laquelle ou lequel est mis(e) en service pour plaquer la feuille de support sur la face libre de la plate-forme en formant la surface rigide et fixe de réception des couches successives de composition photodurcissable, et mis(e) hors service pour détacher ladite feuille de support de ladite plate-forme.

En particulier, la plate-forme de construction peut être une plaque perforée dont les perforations se présentent notamment sous la forme de trous et/ou de fentes reliés à la pompe à vide ou au générateur de vide, disposés pour assurer lorsque celle-ci ou celui-ci est en marche le plaquage de la feuille de support.

Conformément à une deuxième variante de ce premier mode de réalisation de la machine selon l'invention, la plate-forme de construction est un réceptacle, notamment en métal ou matière plastique, de forme plate, dont le fond présente des perforations reliées à une pompe à vide et qui reçoit une grille, notamment en métal, la feuille de support venant s'appliquer sur la bordure libre du réceptacle et sur la grille, ladite pompe à vide étant mise en service pour plaquer ladite feuille de support sur la bordure libre du réceptacle et sur la grille en formant la surface rigide et fixe de réception des couches successives de composition photodurcissable, et mise hors service pour détacher ladite feuille de support de ladite plate-forme.

Dans ce premier mode de réalisation de la machine selon la présente invention :
- la feuille de support peut avoir une épaisseur de 0,05 - 5 mm ; en tout cas, on choisit une épaisseur de feuille qui n'empêche pas la déformation de celle-ci ;
- la feuille de support peut être une feuille en poly(chlorure de vinyle) ou en alcool polyvinylique, ce dernier étant soluble dans l'eau.

Conformément à un deuxième mode de réalisation de la machine selon la présente invention, les moyens de sollicitation sont des moyens assurant une attraction magnétique de ladite feuille de support, laquelle est en une matière ferro-magnétique, sur la plate-forme de construction, laquelle est apte à générer un flux magnétique commandable, ledit flux magnétique étant activé pour plaquer ladite feuille de support sur ladite plate-forme, et désactivé pour détacher ladite feuille de support de ladite plate-forme.

Dans une première variante de ce deuxième mode de réalisation, la plate-forme de construction est un plateau magnétique à aimants permanents activable ou désactivable mécaniquement.

Dans une deuxième variante de ce deuxième mode de réalisation, la plate-forme de construction est un plateau électromagnétique à bobine(s), le flux magnétique étant activé lorsqu'un courant continu est envoyé dans la ou les bobines, et désactivé lorsqu'aucun courant ne traverse la ou les bobines.

Pour mieux illustrer l'objet de la présente invention, on va en décrire ci-après, à titre indicatif et non limitatif, des modes de réalisation particuliers avec référence au dessin annexé.

Sur ce dessin :
- la Figure 1 est une vue schématique en perspective d'une machine selon l'invention pour la fabrication par voie pâteuse d'une pièce crue en matériau céramique, comportant une plate-forme de construction réalisée conformément à un premier mode de réalisation, la feuille de support ayant été omise sur cette figure ;
- la Figure 2 est, à plus grande échelle, une vue en perspective éclatée de la plate-forme de construction et de la feuille de support équipant la machine de la Figure 1 ;
- les Figures 3 et 4 sont des vues en perspective d'une plate-forme de construction réalisée selon des variantes de celle des Figures 1 et 2 ;
- la Figure 5 est, à plus grande échelle, une vue schématique en coupe d'une pièce en cours de formation sur la plate-forme de construction de la machine de la Figure 1, ladite coupe étant effectuée selon le sens du raclage ;
- les Figures 6 à 11 illustrent la construction d'une pièce avec la machine de la Figure 1 ;
- les Figures 12 à 14 sont des vues schématiques analogues à la Figure 1 d'une machine de fabrication par voie liquide d'une pièce crue en matériau céramique par la technique des procédés additifs, avec des moyens d'irradiation respectivement par le dessus pour la machine de la Figure 12 et par le dessous pour les machines des Figures 13 et 14 ;
- la Figure 15 est une vue schématique en coupe d'une plate-forme de construction recouverte de la feuille de support, la plate-forme de construction étant réalisée conformément à une variante des Figures précédentes ;
- la Figure 16 est une vue de dessus de la plate-forme de la Figure 15 avec la feuille de support, celle-ci étant représentée avec arrachement partiel ;
- les Figures 17a et 17b sont des vues schématiques en coupe d'une plate-forme de construction réalisée conformément à une première variante d'un deuxième mode de réalisation de la présente invention, dans les positions respectives d'application et de détachement de la feuille de support par rapport à ladite plate-forme ; et
- les Figures 18a et 18b sont des vues correspondant aux Figures respectivement 17a et 17b d'une deuxième variante de ce deuxième mode de réalisation.

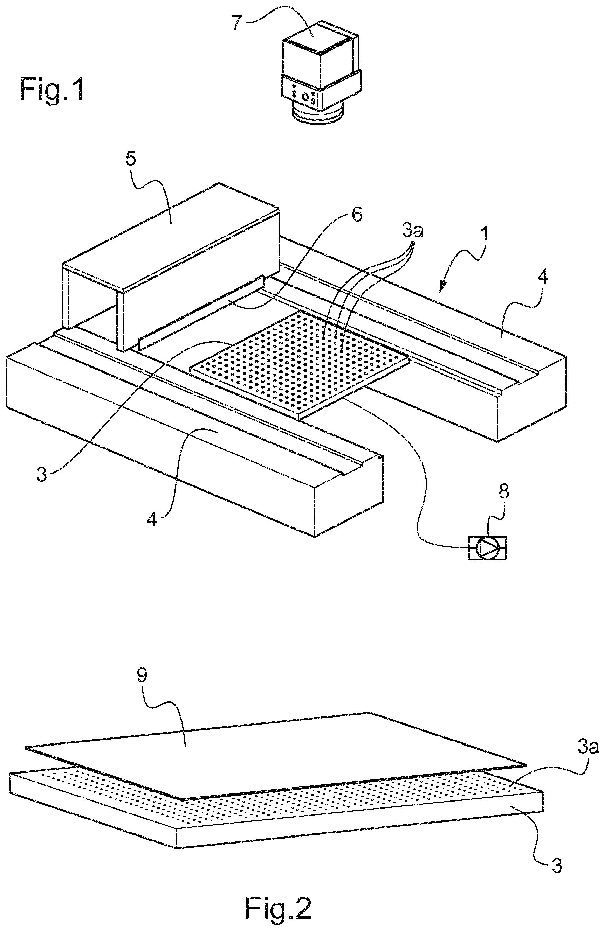

Si l'on se réfère à la Figure 1, on peut voir que l'on a représenté schématiquement un dispositif 1 de raclage d'une couche de pâte 2 sur une surface de travail d'une plate-forme de construction 3 d'une machine de fabrication de corps crus en matériau céramique par la technique des procédés additifs. Le dispositif de raclage 1, monté coulissant sur le bâti 4 de la machine, comporte un portique 5 portant à l'avant une lame de raclage 6 ayant un bord de raclage horizontal.

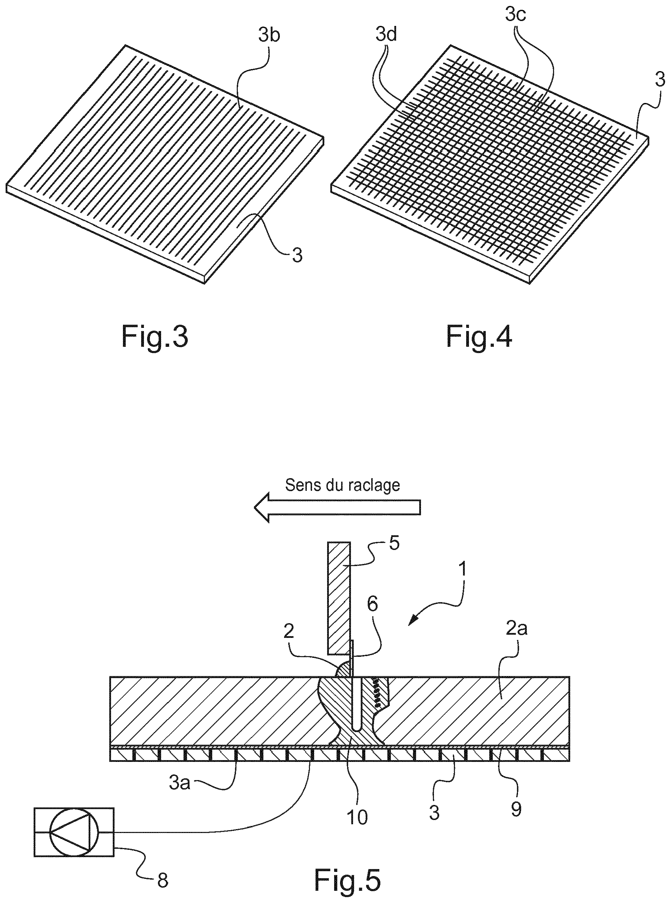

La plate-forme de construction 3 comporte une matrice de trous traversants 3a régulièrement disposés. Conformément à des variantes représentées sur les Figures 3 et 4, les trous 3a sont remplacés par des fentes 3b parallèles à un bord du plateau de travail (Figure 3), ou des fentes 3c disposées pour former un quadrillage (Figure 4) .

Sur la Figure 1, on a également fait figurer la tête galvanométrique 7 qui oriente le faisceau laser ainsi qu'un système d'aspiration 8 dont le rôle sera décrit ci-après.

Sur la Figure 5, on peut voir la feuille de support 9 dont le rôle est indiqué plus loin ainsi que l'objet 10 en cours de fabrication.

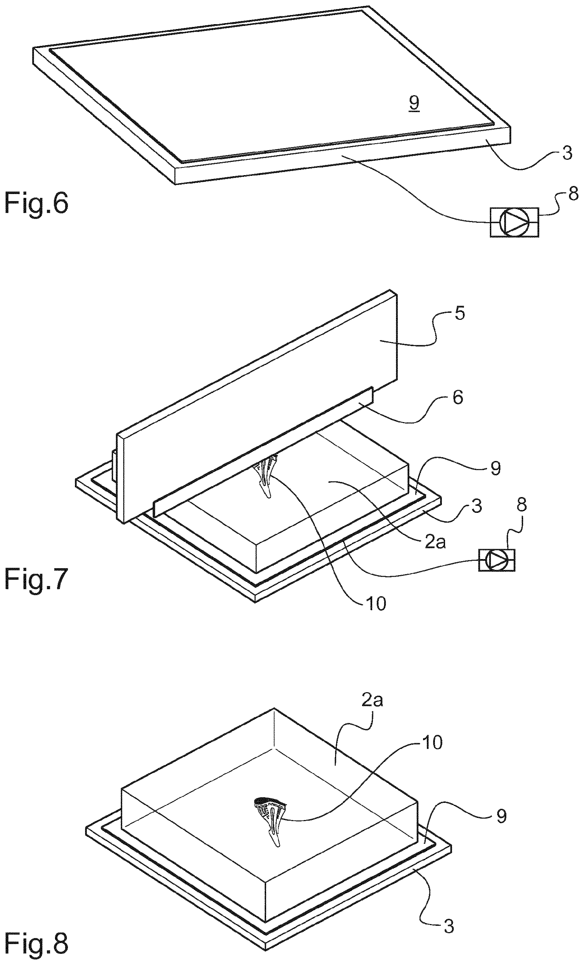

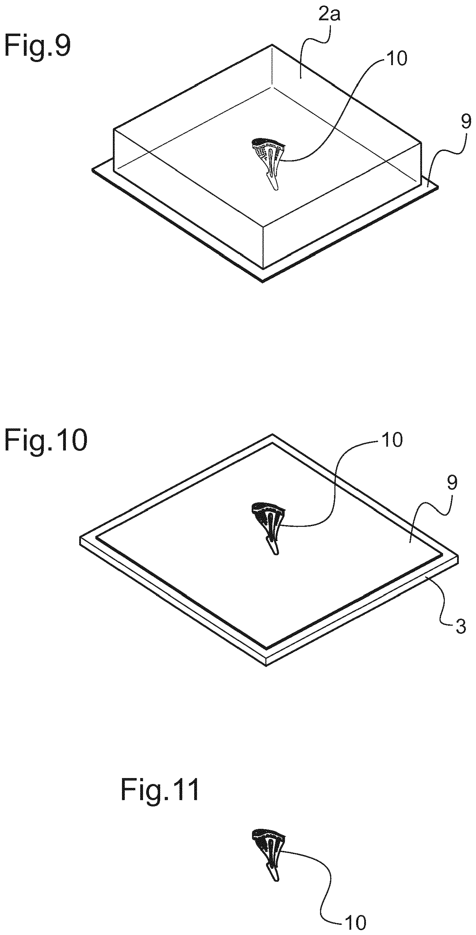

On va maintenant décrire le fonctionnement de la machine de la Figure 1 avec référence aux Figures 6 à 11.

### Figure 6

Au début de la production, la plate-forme de construction 3 est mise en dépression par mise en service du système d'aspiration 8 afin d'aspirer et de brider la feuille 9 qui servira de support de construction.

### Figure 7

L'aspiration est maintenue pendant toute l'impression afin de fournir une base fixe et rigide à la pièce imprimée 10.

### Figure 8

Après l'impression, le vide est rompu.

### Figure 9

La feuille 9 supportant la pièce 10 est facilement séparée du plateau de travail 3.

### Figure 10

La pâte non durcie 2a autour de la pièce 10 est retirée. La pièce 10 est toujours sur la feuille de support 9.

### Figure 11

La feuille 9 est déformée afin de décrocher la pièce 10 sans l'endommager.

### EXEMPLE

On a fabriqué une pièce crue en matériau céramique à l'aide de la machine de la Figure 1.

On a utilisé une plate-forme de construction 3 percée d'une matrice de trous 3a de 1 mm de diamètre et espacés entre eux de 7 mm. Une feuille de poly(chlorure de vinyle) 9 de 100 µm d'épaisseur a été placée sur ce plateau de travail 3 afin d'être aspirée, un vide de 1 mbar(100Pa) ayant été généré à cet effet à l'aide d'une pompe à palette 8.

Une fois la pièce crue 10 terminée, on a coupé le vide. On a nettoyé la pièce 10 pour en retirer la pâte 2a non durcie. La pièce 10 a alors été détachée sans difficulté de la feuille de support 9.

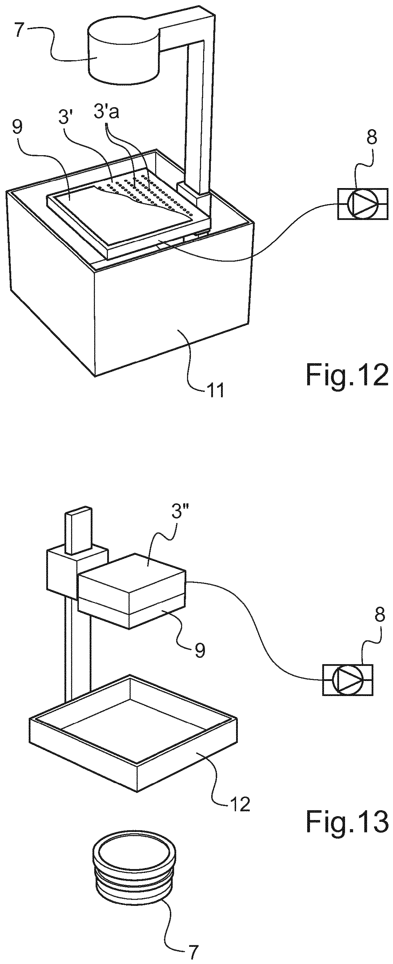

Si l'on se réfère aux Figures 12 à 14, on peut voir que l'on a représenté schématiquement une machine pour la fabrication de pièces céramiques crues par voie liquide, avec irradiation respectivement par le dessus, par le dessous, et par le dessous.

La machine de la Figure 12 comporte un bac 11 dans lequel se trouve la suspension photodurcissable. Une plate-forme horizontale perforée 3' percée de trous 3'a est montée pour descendre pas à pas dans le bac 11 afin d'être recouverte à chaque fois pour une couche de suspension photodurcissable, laquelle sera irradiée par les moyens d'irradiation 7. Selon l'invention, une feuille de support 9 est placée sur la plate-forme 3' et aspirée contre cette dernière par le système d'aspiration 8, comme cela a été décrit précédemment avec référence à la Figure 1.

La machine de la Figure 13 comporte un réservoir 12 à fond transparent pour l'irradiation. Ce réservoir 12 sera rempli par la suspension photodurcissable. Une plate-forme horizontale 3" percée de trous 3"a est montée apte à venir se placer dans le réservoir 12 parallèlement à son fond et à une distance de celui-ci correspondant à l'épaisseur de la première couche à former sur ladite plate-forme 3" qui constitue le support rigide de construction de la pièce, l'irradiation s'effectuant par les moyens 7 placés sous ledit fond. Selon l'invention, une feuille de support 9 est plaquée par aspiration par le système d'aspiration 8 sous ladite plate-forme 3", laquelle, après formation de la première couche, est remontée pas à pas dans le réservoir 12 pour la formation de chacune des autres couches.

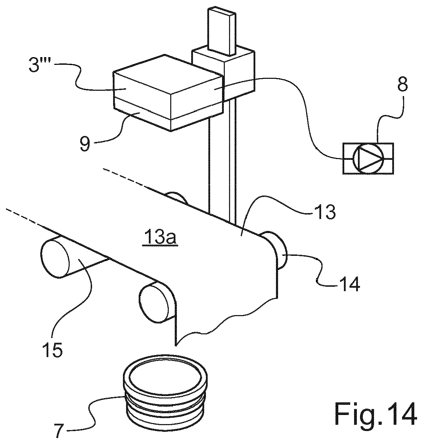

La machine de la Figure 14 comporte un film 13 transparent à l'irradiation qui se déroule d'une bobine 14 pour s'enrouler sur une bobine 15. A chaque fois qu'une couche doit être formée, le segment 13a du film 13 entre les bobines 14 et 15 est revêtu par une couche de suspension photodurcissable, puis l'ensemble plate-forme 3''' et feuille de support 9 - de même type que l'ensemble plate-forme 3" et feuille de support 9 de la Figure 13 - est descendu pour venir en contact avec la couche de suspension appliquée, laquelle est amenée à durcir par irradiation par le dessous à travers le film transparent. L'ensemble plate-forme 3''' et sa feuille de support 9 est ensuite remonté pour permettre l'application d'une nouvelle couche de suspension appliquée sur le segment suivant du film que l'on a fait se dérouler. L'opération est recommencée jusqu'à l'obtention de la pièce crue recherchée.

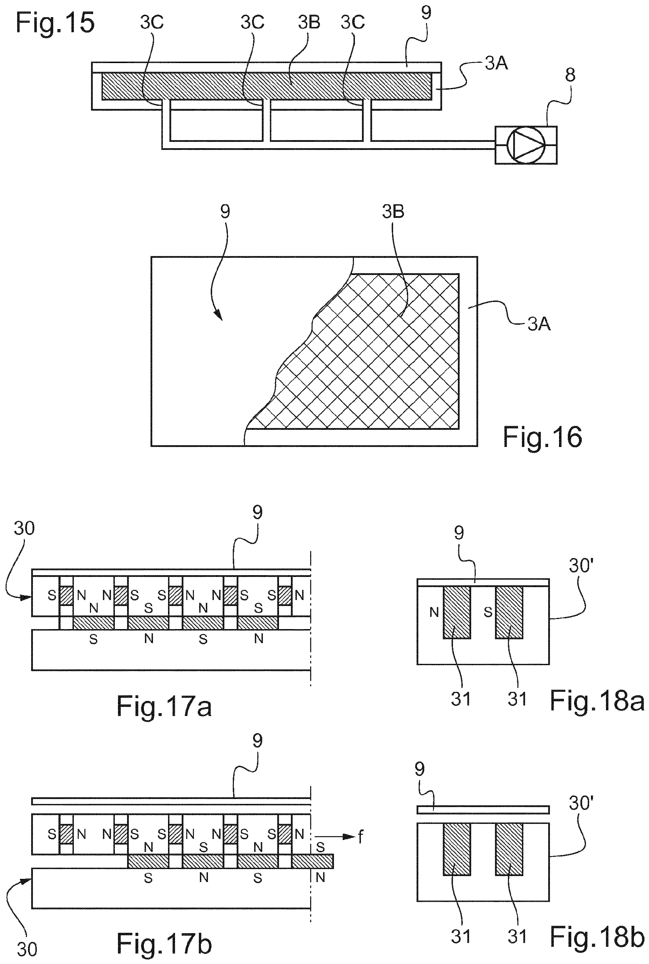

Si l'on se réfère aux Figures 15 et 16, on peut voir que l'on a représenté une plate-forme de construction réalisée conformément à une variante. Cette plate-forme se compose d'un réceptacle 3A, à fond plat, par exemple métallique, dans lequel est disposée une grille par exemple métallique 3B venant affleurer la bordure libre périphérique du réceptacle 3A. Le fond du réceptacle 3A présente des trous 3C reliés à la pompe à vide 8. La grille 3B permet de répartir la dépression et le réceptacle 3A forme un cadre assurant la rigidité lorsque la feuille de support 9 vient s'appliquer sur son rebord périphérique et sur la grille 3B.

Il serait possible que la grille 3B se situe légèrement au-dessus du rebord du réceptacle 3A mais il n'est pas envisageable qu'elle dépasse dudit rebord du réceptacle 3A.

Si l'on se réfère aux Figures 17a et 17b, on peut voir que l'on a représenté schématiquement en coupe une plate-forme 30 qui consiste en un plateau magnétique à aimants permanents que l'on peut activer (Figure 17a) et désactiver (Figure 17b) mécaniquement par translation selon la flèche f. Lors de l'activation, la feuille de support, ici en matériau ferro-magnétique, est appliquée fermement sur la face supérieure de la plate-forme 30, et lors de la désactivation, la feuille de support 9 se détache de la plate-forme 30. Cette technologie est mise au point par la Société Braillon (http://www.braillon.com/français/nos-technologies.html).

Si l'on se réfère aux Figures 18a et 18b, on peut voir que l'on a représenté schématiquement en coupe une plate-forme 30' à bobines 31, sur laquelle vient s'appliquer la feuille de support 9. Cette technologie est également proposée par la Société Braillon.

Un champ magnétique est généré par l'excitation des bobines 31 par du courant continu, la feuille de support 9 étant maintenue (Figure 18a). Lorsqu'aucun courant ne traverse les bobines 31, la feuille de support 9 est détachée.

## Revendications

1. Procédé de fabrication, par la technique des procédés additifs, d'une pièce crue (10) en au moins un matériau choisi parmi les matériaux céramiques et les matériaux métalliques, procédé suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir sur la couche précédente, **caractérisé par le fait que** :
- avant de réaliser la première couche :
- on couvre la plate-forme de construction (3 ; 3' ; 3" ; 3''' ; 3A-3B ; 30 ; 30') d'une feuille de support (9) apte à être sollicitée contre celle-ci en formant une surface rigide et fixe de réception des couches successives apte à retenir sur celle-ci les couches successives formées ; et
- on sollicite ladite feuille de support (9) contre ladite plate-forme de construction (3 ; 3' ; 3" ; 3''' ; 3A-3B ; 30 ; 30') ;
- on forme la pièce crue (10) par la technique des procédés additifs ; et
- une fois la pièce crue (10) ainsi formée, on supprime la sollicitation afin de détacher de ladite plate-forme (3 ; 3' ; 3" ; 3'" ; 3A-3B ; 30 ; 30') ladite feuille de support (9) sur laquelle se trouve la pièce crue (10) avec la partie de la composition photodurcissable qui n'a pas été durcie (2a) ;
- on retire ladite partie de composition photodurcissable non durcie (2a) ; et
- on décroche ladite pièce crue (10) de ladite feuille de support (9).

2. Procédé selon la revendication 1, **caractérisé par le fait que** l'on choisit une feuille de support (9) déformable pour permettre, une fois la sollicitation supprimée, de décrocher la pièce crue (10) de sa feuille de support (9) par application d'une contrainte sur ladite feuille de support (9) de manière à la déformer dans le but de libérer la pièce crue (10).

3. Procédé selon l'une des revendications 1 et 2, **caractérisé par le fait que** l'on réalise la sollicitation par aspiration de ladite feuille de support (9) contre ladite plate-forme de construction (3 ; 3' ; 3" ; 3''').

4. Procédé selon la revendication 3, **caractérisé par le fait que** l'on utilise, comme plate-forme de construction, une plaque plane perforée (3 ; 3' ; 3" ; 3''') ou poreuse en un matériau rigide, tel que céramique, métallique ou plastique, dont on recouvre la face libre par la feuille de support (9) et qui est reliée, par sa face opposée, à une pompe à vide (8) ou à un générateur de vide, laquelle ou lequel est mis(e) en service pour plaquer la feuille de support (9) sur la face libre de la plate-forme en formant la surface rigide et fixe de réception des couches successives de composition photodurcissable, et mis(e) hors service pour détacher ladite feuille de support (9) de ladite plate-forme.

5. Procédé selon la revendication 3, **caractérisé par le fait que** l'on utilise, comme plate-forme de construction, un réceptacle (3A), notamment en métal ou matière plastique, de forme plate, dont le fond présente des perforations (3C) reliées à une pompe à vide (8) et qui reçoit une grille (3B), notamment en métal, la feuille de support (9) venant s'appliquer sur la bordure libre du réceptacle (3A) et sur la grille (3B), ladite pompe à vide (8) étant mise en service pour plaquer ladite feuille de support (9) sur la bordure libre du réceptacle (3A) et sur la grille (3B) en formant la surface rigide et fixe de réception des couches successives de composition photodurcissable, et mise hors service pour détacher ladite feuille de support (9) de ladite plate-forme (3A-3B).

6. Procédé selon l'une des revendications 3 à 5, **caractérisé par le fait que** l'on génère un vide de 13,33 Pa - 10⁻¹⁰ Pa (0,133 mbar-10⁻¹² mbar) .

7. Procédé selon l'une des revendications 1 et 2, **caractérisé par le fait que** l'on réalise la sollicitation par attraction magnétique de ladite feuille de support (9), laquelle est en une matière ferro-magnétique, sur la plate-forme de construction (30 ; 30'), laquelle est apte à générer un flux magnétique commandable, ledit flux magnétique étant activé pour plaquer ladite feuille de support (9) sur ladite plate-forme (30 ; 30'), et désactivé pour détacher ladite feuille de support (9) de ladite plate-forme (30 ; 30'), et que l'on utilise, comme plate-forme, un plateau magnétique (30) à aimants permanents activable ou désactivable mécaniquement, ou un plateau électromagnétique (30') à bobine(s) (31), le flux magnétique étant activé lorsqu'un courant continu est envoyé dans la ou les bobines (31), et désactivé lorsqu'aucun courant ne traverse la ou les bobines (31).

8. Machine de fabrication par la technique des procédés additifs de pièces crues en un matériau choisi parmi les matériaux céramiques et les matériaux métalliques, suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir sur la couche précédente,
ladite machine comportant également des moyens d'irradiation (7) des couches successives,
**caractérisée par le fait que** la machine comporte des moyens (8) de sollicitation contre ladite plate-forme de construction (3 ; 3' ; 3" ; 3''' ; 3A-3B ; 30 ; 30') d'une feuille de support (9) destinée à la couvrir avant la réalisation de la première couche, en formant une surface rigide et fixe de réception des couches successives, apte à retenir sur celle-ci les couches successives formées, lesdits moyens de sollicitation étant aptes à être désactivés pour détacher de ladite plate-forme (3 ; 3' ; 3" ; 3''' ; 3A-3B ; 30 ; 30') ladite feuille de support (9) sur laquelle se trouve la pièce crue (10) avec la partie de la composition photodurcissable qui n'a pas été durcie (2a) .

9. Machine selon la revendication 8, **caractérisée par le fait que** la feuille de support (9) est choisie déformable pour permettre, une fois la sollicitation supprimée, de décrocher la pièce crue (10) de sa feuille de support (9) par application d'une contrainte sur ladite feuille de support (9) de manière à la déformer dans le but de libérer la pièce crue (10).

10. Machine selon l'une des revendications 8 et 9, **caractérisée par le fait que** les moyens de sollicitation sont des moyens de bridage par aspiration, consistant notamment en une pompe à vide (8), telle qu'une pompe à palette, une pompe à membrane, une pompe à piston(s), ou en un générateur de vide tel qu'un générateur à effet Venturi, lesdits moyens d'aspiration étant notamment aptes à générer un vide de 13,33 Pa - 10⁻¹⁰ Pa (0,133 mbar-10⁻¹² mbar) .

11. Machine selon la revendication 10, **caractérisée par le fait que** la plate-forme de construction est une plaque plane perforée (3 ; 3' ; 3" ; 3''') ou poreuse en un matériau rigide, tel que céramique, métallique ou plastique, dont on recouvre la face libre par la feuille de support et qui est reliée, par sa face opposée, à une pompe à vide ou à un générateur de vide, laquelle ou lequel est mis(e) en service pour plaquer la feuille de support (9) sur la face libre de la plate-forme en formant la surface rigide et fixe de réception des couches successives de composition photodurcissable, et mis(e) hors service pour détacher ladite feuille de support (9) de ladite plate-forme.

12. Machine selon la revendication 10, **caractérisée par le fait que** la plate-forme de construction est un réceptacle (3A), notamment en métal ou matière plastique, de forme plate, dont le fond présente des perforations (3C) reliées à une pompe à vide (8) et qui reçoit une grille (3B), notamment en métal, la feuille de support (9) venant s'appliquer sur la bordure libre du réceptacle (3A) et sur la grille (3B), ladite pompe à vide (8) étant mise en service pour plaquer ladite feuille de support (9) sur la bordure libre du réceptacle (3A) et sur la grille (3B) en formant la surface rigide et fixe de réception des couches successives de composition photodurcissable, et mise hors service pour détacher ladite feuille de support (9) de ladite plate-forme (3A-3B).

13. Machine selon l'une des revendications 10 à 12, **caractérisée par le fait que** la feuille de support (9) a une épaisseur de 0,05 - 5 mm.

14. Machine selon l'une des revendications 10 à 13, **caractérisée par le fait que** la feuille de support (9) est une feuille en poly(chlorure de vinyle) ou en alcool polyvinylique.

15. Machine selon l'une des revendications 8 et 9, **caractérisée par le fait que** les moyens de sollicitation sont des moyens assurant une attraction magnétique de ladite feuille de support (9), laquelle est en une matière ferro-magnétique, sur la plate-forme de construction (30 ; 30'), laquelle est apte à générer un flux magnétique commandable, ledit flux magnétique étant activé pour plaquer ladite feuille de support (9) sur ladite plate-forme (30 ; 30'), et désactivé pour détacher ladite feuille de support (9) de ladite plate-forme (30 ; 30'), la plate-forme de construction étant un plateau magnétique (30) à aimants permanents activable ou désactivable mécaniquement, ou un plateau électromagnétique (30') à bobine(s) (31), le flux magnétique étant activé lorsqu'un courant continu est envoyé dans la ou les bobines (31), et désactivé lorsqu'aucun courant ne traverse la ou les bobines (31).
